# EUROPEAN PATENT SPECIFICATION

(11) **EP 2 030 459 B1**
(45) Date of publication and mention of the grant of the patent: **23.12.2009**
(21) Application number: 07730762.7
(22) Date of filing: 15.05.2007
(51) Int. Cl.: H04W 28/24

(54) **MANAGING QUALITY-OF-SERVICE PROFILES IN A MOBILE TELECOMMUNICATIONS SYSTEM**
VERWALTUNG VON DIENSTEQUALITÄTSPROFILEN IN EINEM MOBILTELEKOMMUNIKATIONSSYSTEM
GESTION DE PROFILS DE QUALITÉ DE SERVICE DANS UN SYSTÈME DE TÉLÉCOMMUNICATION MOBILE

(30) Priority: 18.05.2006 FI 20065341
(43) Date of publication of application: 04.03.2009
(73) Proprietor: TELIASONERA AB, 10663 Stockholm (SE)
(72) Inventor: HUOVIALA, Rauno, FI-00530 Helsinki (FI); SVAHNSTRÖM, Niclas, FI-00100 Helsinki (FI)
(74) Representative: Äkräs, Tapio Juhani
(86) International application number: PCT/FI2007/050275
(87) International publication number: WO 2007/135236

(56) References cited:
- EP-A- 1 250 023
- WO-A-2006/037361
- US-A1- 2002 132 611
- US-A1- 2004 037 269

## Description

### FIELD OF THE INVENTION

The present invention relates to a method of managing quality-of service (QoS) profiles, and more particularly to adjusting service profile parameters.

### BACKGROUND OF THE INVENTION

One of the third generation mobile communication system has been specified by 3GPP (Third generation partnership project). The first 3GPP specification was released in 1999, and is called the 3GPP release 99. The release 99 specified a third-generation (3G) mobile system comprising wide-band code division multiple access (WCDMA). In the subsequent releases various new functionalities have been introduced, such as the IMS (IP multimedia sub-system). According to the release 99, the WCDMA system normally carries user data over dedicated transferred channels, DCHs, which are code multiplexed onto one RF carrier.

WCDMA downlink evaluation, HSDPA (High speed downlink packet access), is part of 3GPP release 5 WCDMA specifications, which offers significantly higher data capacity and data-user speeds on the downlink compared to the release 99 system. This is possible through the use of a new transport channel type, high-speed downlink shared channel (HS-DSCH), and a set of smart mechanisms, such as very dynamic adaptive modulation and coding, a fast cellular and fast retransmissions implemented in the PTS. The new feature is fully release 99 backward compatible and can coexist on same RF carrier with release 99 WCDMA traffic. The HSDPA feature will require new terminals which, however, will be built in with release 99 terminals and will be compatible with release 99 WCDMA networks. These terminals are referred to as HSDPA capable terminals herein.

According to the present 3GPP specifications, the HS-DSCH is shared among all HSDPA capable terminals in the cell. The HSDPA feature is designed to maximize the user bit rates, and that is the main target of the new shared channel. The HSDPA will be introduced into operator networks in stages. In the first HSDPA implementations, the code and power resources allocated to HS-DSCH are fixed, so that only part of the release 99 WCDMA resources is now dedicated to HSDPA. However, the HSDPA users can still use the release 99 WCDMA resources when operating in DCH (dedicated channel) mode. The fixed HSDPA resources may be in a proportion 5/15 of the spreading codes, and some similar proportion of the transmission power. With these assumptions, the user bit rate achieved in HSDPA varies from below 100 kbps to several Mbps for a single user, depending on radio propagation.

In HSUPA (High speed uplink packet access), an uplink data transfer mechanism is provided by physical HSUPA channels, such as an E-DPDCH (Enhanced Dedicated Physical Data Channel), implemented on top of WCDMA uplink physical data channels, such as a DPCCH (Dedicated Physical Control Channel) and a DPDCH (Dedicated Physical Data Channel), thus sharing radio resources, such as power resources, with the WCDMA uplink physical data channels.

WO 2006/037361 A1 discloses a mobile communications system in which a requested service profile is aligned to both a subscribed service profile (in the HLR) as well as to a network service level profile (provided in the visited network).

One of the problems associated with the above arrangements is that as HSDPA and/or HSUPA are entering the market, different operators and vendors are launching these capabilities in different time frames. This leads to a situation where some operator networks offer HSDPA/HSUPA services while others do not. An end-user roaming with an HSDPA/HSUPA capable terminal leads to situations where the packet data service in the roaming network may not be sufficiently utilized in HSDPA/HSUPA sense. Also new QoS features, such as streaming and/or conversational class support, are introduced into the mobile networks. Various operators and vendors are also introducing these features in their networks on different time schedules. Each operator may configure the QoS parameters optimally according to the capabilities of their own network only.

### BRIEF DESCRIPTION OF THE INVENTION

It is thus an object of the present invention to provide a method and an apparatus for implementing the method, so as to solve the above problem. The objects of the invention are achieved by a method, wireless communication system and serving network node which are characterized by what is stated in the independent claims. The preferred embodiments are disclosed in the dependent claims.

The invention relates to a situation where a user terminal is roaming in a visited network. According to the invention, a service profile of the roaming user terminal is checked in the visited network, and if the service capability of the visited network is higher than the capability defined in the service profile, a visited network node is configured to upgrade the service profile of the roaming user terminal according to the service capability of the visited network.

An advantage of the method and arrangement of the invention is that by using the present solution, the inconsistency between the network capability and the QoS profile of the roaming users can be removed. The present solution enables a roaming user to utilise the QoS features, such as HSDPA, HSUPA, interactive traffic class, streaming traffic class and/or conversational traffic class, of the visited radio network, which they otherwise would not benefit from.

### BRIEF DESCRIPTION OF THE DRAWINGS

In the following the invention will be described in greater detail by means of preferred embodiments with reference to the attached drawings, in which
Figure 1 illustrates a communication system according to the invention;
Figure 2 is a signalling chart illustrating the method according to the invention;
Figure 3 is a flow chart illustrating the function of a serving network node according to the invention.

### DETAILED DESCRIPTION OF THE INVENTION

In the following, preferred embodiments of the invention will be described with reference to a third generation mobile communications system, such as the UMTS (Universal Mobile Communications System). This invention is not, however, meant to be restricted to these embodiments. Consequently, the invention may be applied in any mobile communications system that provides GPRS-type packet switched radio service capable of transmitting packet-switched data. Examples of other systems include the IMT-2000 and its evolution techniques (such as HSDPA, HSUPA, 3GPP LTE (Long term evolution)), IS-41, GSM, or the like, such as the PCS (Personal Communication System) or the DCS 1800 (Digital Cellular System for 1800 MHz). The specifications of mobile communications systems and particularly those of the IMT-2000 and the UMTS advance rapidly. This may require additional changes to the invention. For this reason, the terminology and the expressions used should be interpreted in their broadest sense since they meant to illustrate the invention and not to restrict it. The relevant inventive aspect is the functionality concerned, not the network element or equipment where it is executed.

High-speed downlink packet access HSDPA is a key feature of the WCDMA, providing high data rate transmission in a CDMA downlink to support multimedia services. HSDPA brings high-speed data delivery to 3G terminals, ensuring that users requiring effective multimedia capabilities benefit from data rates previously unavailable because of limitations in the radio access network RAN.

High speed uplink packet access HSUPA is a packet-based data service in a WCDMA uplink with typical data transmission capacity of a few megabits per second, thus enabling the use of symmetric high-speed data services, such as video conferencing, between user equipment and a network infrastructure. Although in the following the present invention has been mainly discussed with reference to HSDPA service, it should noted that the present invention is also applicable to HSUPA service respectively.

Dedicated traffic channel or dedicated channel DCH refers to the traffic channel for user traffic and signalling. The dedicated traffic channel is dedicated to specific user equipment.

The term Quality of Service QoS is used for the collective effect of service performance determining a degree of satisfaction of a service user. It refers to combined aspects of performance factors that are applicable to communications services, such as service operability performance, service accessibility performance, service retainability performance, or service integrity performance.

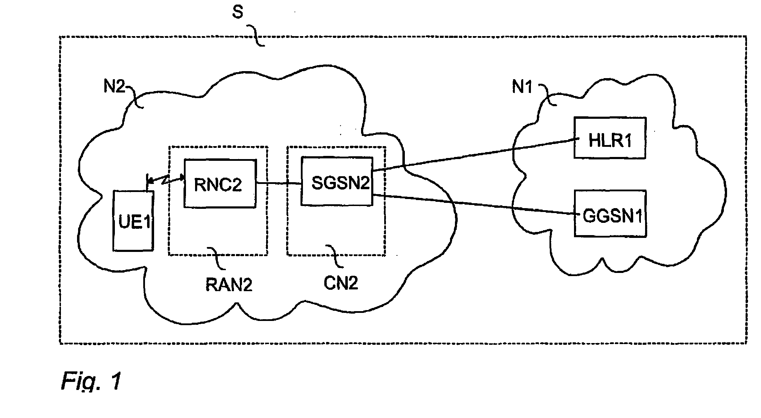

Figure 1 illustrates a communications system S according to the present solution such that only elements most relevant to the invention are induded. It is apparent to a person skilled in the art that a mobile communications system also comprises other functions and structures that need not be described in greater detail in this context. Figure 1 shows a situation where a user terminal UE1 is roaming in a visited network N2. The visited network N2 comprises a core network CN2 and a radio access network RAN2. The visited core network CN2 includes a serving GPRS support node SGSN2, and the visited radio network RAN2 includes a radio network controlled RNC2. The home network N1 of the user terminal UE1 comprises a gateway GPRS support node GGSN1 and a home location register HLR1. While roaming in the N2, the user terminal UE1 is able to connect to the SGSN2 via RNC2. The SGSN2 of the visited network N2 is able to connect to the gateway GPRS support node GGSN1 and to the home location register HLR1 of the home network N1.

In conventional systems, a user with an HSDPA capable terminal cannot get HSDPA service in his/her home network, if the home network is not HSDPA capable. Therefore the QoS profile of the user is defined in the home network (e.g. in the HLR) and it is configured for DCH usage. Thus a maximum bit rate is set according to DCH usage. If the user visits the network of another operator that is HSDPA capable, the DCH specific QoS profile (e.g. the maximum bit rate) is not efficient for HSDPA usage in the visited network.

In conventional systems, the core network (e.g. the SGSN) of the visited network is not aware of the HSDPA capability of the user terminal. Hence, the SGSN is not able to distinguish HSDPA capable and incapable terminals from each other. According to the present invention, in order to offer efficient HSDPA service for the user in the visited network (i.e. in the roaming network), the QoS profile is to be adjusted. The present invention describes a solution for adjusting the QoS profile of a roaming user terminal having an HSDPA capability, while still allowing QoS profiles of non-HSDPA capable user terminals to be kept intact. The present solution enables the QoS profile of the roaming user terminal to be adjusted such that the user terminal is able to benefit fully from its HSDPA capability and/or from the HSDPA performance offered by the roaming network.

In the present solution, new functionality is introduced to the SGSN of the roaming network, which enables the SGSN2 to adjust the QoS profile of the roaming user. For example, the maximum bit rate can be adjusted to HSDPA level, e.g. upgraded from 384 kbps to 2 Mbps. The SGSN2 modifies the QoS profiles received from the home network, and the modified profile is then used for PDP context set-up.

In an embodiment of the present solution, non-HSDPA capable terminals are be downgraded back to lower values. This is possible because, the visited network N2 is able to recognise if the user terminal is non-HSDPA capable. This means that a visited network node (e.g. the RNC2) is configured to find out information on a service capability of the user terminal UE1. If the service capability of the user terminal UE1 is lower than the upgraded service profile, the visited network N2 downgrades the service profile of the user terminal UE1 according to the service capability of the user terminal UE1.

Also other QoS parameters may be adjusted for HSDPA usage by means of the present solution. Such parameters that may have a different effect in HSDPA and DCH radio access might include, for example, a residual bit error ratio (BER) and/or a service data unit (SDU) error ratio.

The present solution also enables offering background, interactive, streaming or conversational traffic class support for the user terminal in the visited network even N2 if the home network N1 of the user terminal does not support the traffic class in question. For example, the home network N1 may support interactive and/or background traffic class, wherein, according to the present solution, a streaming class capable user terminal UE1 may request streaming class in the visited network N2, and the visited network N2 is able to upgrade the traffic class of the user terminal UE1 to streaming class. Thus the traffic class of the user terminal UE1 may be upgraded a) from background class to interactive, streaming or conversational class, b) from interactive class to streaming or conversational class, or c) from streaming class to conversational class.

The parameters to be adjusted by means of the present solution depend on the capabilities of the visited radio network RAN2. The SGSN2 of the visited network N2 is provided with information on the requested and subscribed QoS profile. Information on the requested QoS profile is received from the user terminal UE1 and it depends on the capability of the terminal. Information on the terminal's HSDPA capability is not needed in the SGSN2.

In case the home network N1 of the roaming user terminal UE1 is not HSDPA capable, the QoS profile is set in the home network N1 according to the DCH bearers offered by the home network N1. It means that the maximum bit rate is set, for example, to 384 kbps or lower. If the user terminal UE1 is roaming in the network N2 of another operator during a PDP context setup, information on the QoS profile defined in the home network N1 is provided to the visited network N2. Therefore, the maximum bit rate is, at first, set to 384 kbps or lower also in the visited network N2. However, the SGSN2 of the visited network N2 is able to recognise that the user terminal UE1 is a roaming user terminal. According to the present solution, the visited SGSN2 modifies the QoS profile of the roaming user terminal UE1 after receiving information on the QoS profile from the HLR1 of the home network N1. The maximum bit rate is upgraded, for example, to 2 Mbps or higher. As a RAB assignment request is received in the visited RNC from the visited SGSN2, the RNC2 is able to set up an HSDPA connection with the upgraded bit rate.

However, before the connection setup, the RNC2 interrogates the user terminal UE1 whether it is HSDPA capable or not. If the visited RNC2 notices that the user terminal UE1 is non-HSDPA capable, e.g. that the maximum capability of the terminal is, for example, 384 kbps or lower, the RNC2 downgrades the maximum bit rate before transmitting the RAB assignment response to the SGSN2. If the RNC2 has downgraded the bit rate, the SGSN2 updates the PDP context towards the GGSN1 of the home network N1.

In case the home network N1 supports the DCH streaming class (or DCH conversational class) and the visited network supports the HSDPA streaming class (or HSDPA conversational class), the present solution allows the roaming user terminal UE1 to utilize the high peak bit rates of the HSDPA. In this case the maximum bit rate is upgraded as explained above.

In case the visited network N2 does not support the HSDPA streaming class (or HSDPA conversational class), SGSN2 may decide not to upgrade the home network parameters in case DCH is preferred for the streaming class (or conversational class) in the visited network N2.

If the home network N1 is not streaming class capable, the QoS profile of the user terminal is set to the interactive or background traffic class in the HLR of the home network. If the visited network supports the streaming class, the present solution allows the roaming user terminal to request the streaming class in the visited network. Based on the request, the visited network upgrades the traffic class of the user terminal to the streaming class although the QoS profile stored in the HLR of the home network has a lower traffic class. Thus the user is able to utilize the streaming class in the visited network and better service quality.

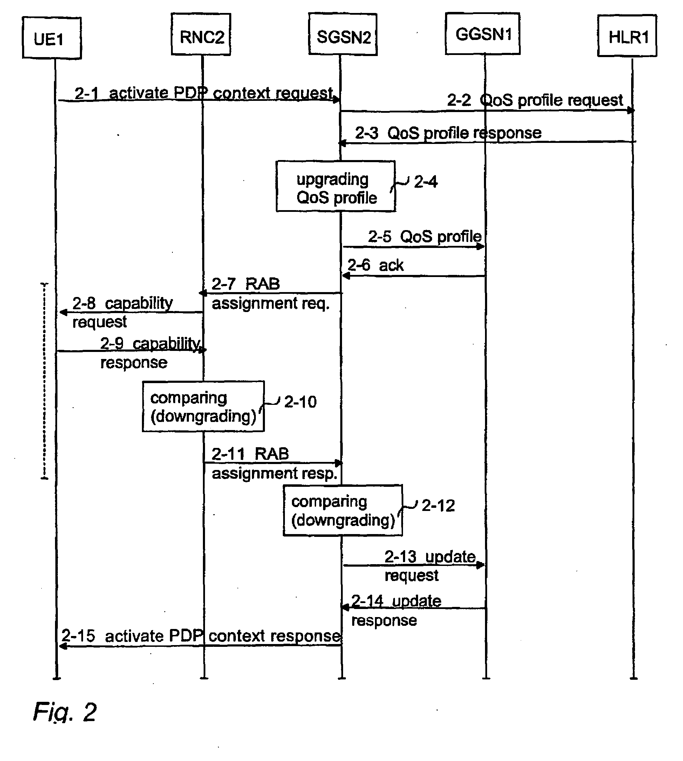

Figure 2 illustrates the signalling according to the invention. The user terminal UE1 requests a QoS profile from the network by transmitting a PDP context activation message 2-1 to the SGSN2 (via the RNC2). In a message 2-2, the SGSN2 requests information on the subscribed QoS profile of the UE1 from the HLR1 which returns it in a message 2-3. After that in step 2-4, the SGSN2 adjusts the QoS profile of the UE1 according to a configuration made by the visited network operator. This means that a maximum bit rate of fered to the UE1 is upgraded to an HSDPA (and/or HSUPA) maximum bit rate if the N2 support the HSDPA (and/or HSUPA) maximum bit rate. The PDP context activation is then continued by transmitting 2-5 the adjusted QoS profile to the GGSN1. GGSN1 accepts the adjusted QoS profile according to its capabilities. The SGSN2 sends a RAB assignment request 2-7 to the RNC2 with the adjusted QoS profile. The RNC2 requests 2-8 and receives 2-9 from the user terminal UE1 information on whether the user terminal UE1 is HSDPA capable or not, i.e. whether it accepts or rejects the new maximum bit rate. If the terminal is not HSDPA capable, the maximum bit rate is downgraded 2-10, for example, to an available DCH maximum bit rate. The RNC2 transmits a RAB assignment response 2-11 to the SGSN2, including the accepted QoS profile. In step 2-12 the SGSN2 receives the accepted QoS profile. If the adjusted maximum bit rate was rejected by the user terminal UE1, the SGSN2 is able to determine that the user terminal is not HSDPA capable. In this case also other HSDPA specific parameter adjustments should be restored to DCH suitable values according to the original home network parameters. Therefore, items from 2-7 to 2-11 in Figure 2 are repeated with the restored values. If needed (i.e. if the adjusted QoS profile was rejected by the UE1), the PDP context and the QoS profile are updated by transmitting an update request message 2-13 from the SGSN2 to the GGSN1 and by transmitting an update response message 2-14 from the GGSN1 to the SGSN2. Then a PDP context activation accept message 2-15 is sent from the SGSN2 (via the RNC2) to the UE1 with the final QoS profile.

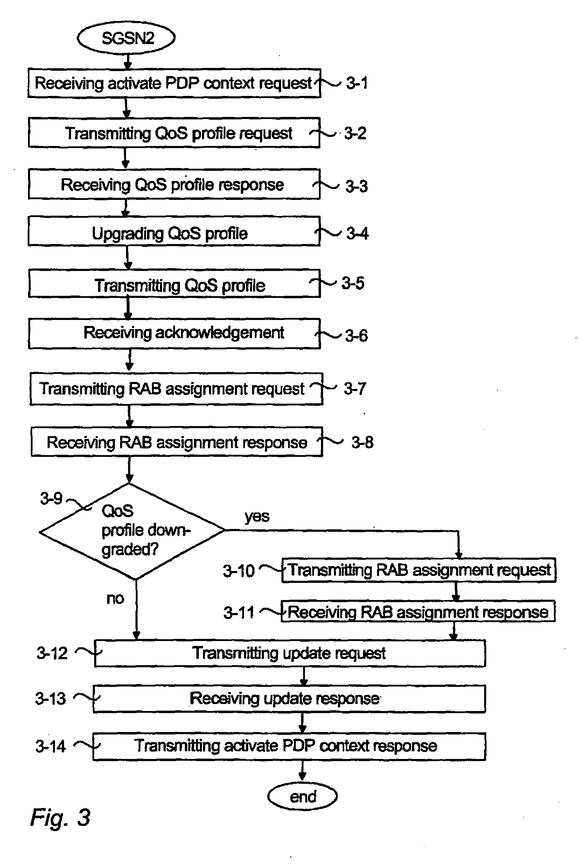

The present solution may be implemented by adding new functionality to the serving network node SGSN2 of the visited network. Figure 3 illustrates the function of the SGSN2 according to the present invention. In step 3-1, an activate PDP context request message sent by the UE1 is received in the SGSN2. The SGSN2 requests 3-2 and receives 3-3 information on the subscribed QoS profile of the user terminal from the HLR1. The QoS profile is adjusted 3-4 (i.e. upgraded if needed) according to a configuration made by the visited operator. Thus, for example, the maximum bit rate is upgraded. The SGSN2 transmits 3-5 to the GGSN1 information on the adjusted QoS profile of the user terminal. An acknowledgement is received 3-6 from the GGSN1 according to its capabilities. Then a RAB assignment request is sent 3-7 to the RNC2 with the adjusted QoS profile. A RAB assignment response is received 3-8 from the RNC2, including the QoS profile accepted by the user terminal UE1. If the adjusted maximum bit rate was rejected (i.e. downgraded), it is determined 3-9 that the terminal is not HSDPA capable. If it is determined in step 3-9 that the terminal is non-HSDPA capable, other HSDPA specific parameter adjustments are to be restored to DCH suitable values. Therefore in this case a new RAB assignment request is sent 3-10 to the RNC2 with the restored values, and a new RAB assignment response is received 3-11 from the RNC2. If needed, information on the PDP context and the QoS profile are updated towards the GGSN1 (i.e. the SGSN2 sends/receives update information to/from the GGSN1). In step 3-14, a PDP context activation accept message is sent to the UE1 with the final QoS profile.

In case of an HSDPA service, the RNC2 preferably offers as high max bit rate as possible to UE1. However, HLR1 may have a limited DCH value, for example, a maximum bit rate of 16 kbps for a PoC service. Therefore, in case of a DCH service, where RNC2 offers a max bit rate of 384 kbps or lower, SGSN2 should be able to compare the original maximum bit rate value stored in HLR1 to the one offered by RNC2, and choose the lower. Then, if the value offered by RNC2 is higher, SGSN2 should carry out a new RAB assignment using the original maximum bit rate. Otherwise wasting of radio resources may occur in case of a PoC service, for example.

The network operator of the visited network N2 is able to define its own limit to the QoS values, and the user terminal UE1 is not able to influence them. However, UE1 should be provided with the best possible service offered by N2.

Depending on the capabilities of the terminal and the networks, the present invention should enable handling a variety of cases in order to provide an optimal QoS for the user. For example, the home network N1, the visited network N2 and the user terminal UE1 may or may not be DCH, HSDPA, HSUPA, background class, interactive class, streaming class and/or conversational class capable. Thus the present invention may enable handling all combinations of those. Alternatively, the present invention may enable the handling of a selected set of the combinations. Therefore, the visited SGSN2 should be aware of the capabilities of the visited radio access network RAN2. The admission control of RNC2 carries out the decision between DCH and HSDPA (or HSUPA) for the different traffic classes.

Below in table 1, examples of possible combinations of traffic classes and QoS parameters are shown. The roaming user is provided with an optimal QoS with different network, terminal, and QoS combinations. Also other QoS parameters or classes may be optimized in addition to or instead of those disclosed in table 1. The idea is that, if possible (i.e. if supported by the visited network), the roaming user is provided with the requested QoS. If that is not possible (i.e. if not supported by the network), the visited user is provided with the possible "next best" QoS.

It should be noted that the upgrading of DCH to HSDPA refers to the upgrading of the downlink maximum bit rate, and the upgrading of DCH to HSUPA refers to the upgrading of the uplink maximum bit rate. They both either are or are not upgraded during the same PDP context setup. Accordingly, it should be noted that the downgrading of HSDPA to DCH refers to the downgrading of the downlink maximum bit rate, and the downgrading of HSUPA to DCH refers to the downgrading of the uplink maximum bit rate. They both either are or are not downgraded during the same PDP context setup.

**Table 1**

| | HSDPA | HSUPA | DCH |
|---|---|---|---|
| Background | Background+HSDPA | Background+HSUPA | Background+DCH |
| Interactive | Interactive+HSDPA | Interactlve+HSUPA | Interactive+DCH |
| Streaming | Streaming+HSDPA | Streaming+HSUPA | Streaming+DCH |
| Conversational | Conversational+HSDPA | Conversational+HSUPA | Conversational+DCH |

For example, in a situation where the user terminal UE1 requests streaming class and the visited network N2 does not support the streaming class, the N2 is preferably arranged to provide interactive class. If the N2 supports HSDPA and/or HSUPA, the QoS service modification described above with reference to Figure 3 is carried out. The admission control of the RNC2 then deduces whether DCH, HSDPA or HSUPA is provided.

In a situation where the user terminal UE1 requests streaming class and the visited network N2 only supports the DCH streaming class, the N2 is preferably arranged to offer the streaming class. The admission control of the RNC2 then deduces that DCH is provided.

In a situation where the user terminal UE1 requests streaming class and the visited network N2 supports the HSDPA streaming class, the N2 is preferably arranged to offer the streaming class with an upgraded maximum bit rate. The admission control of the RNC2 then deduces whether DCH or HSDPA is provided. If the upgraded bit rate is rejected, the original is provided.

In a situation where the user terminal UE1 requests for background class or interactive class and the visited network N2 supports HSDPA, the N2 is preferably arranged to offer an upgraded maximum bit rate. If the upgraded bit rate is rejected, the original is provided.

When upgrading the maximum bit rate, the bit rate is first upgraded according to the maximum bit rate supported by the visited network N2. Then the maximum bit rate is downgraded, if needed, according to the capability of the user terminal UE1.

When upgrading the traffic class, the traffic class is upgraded according to a request by the user terminal UE1. However, if the visited network N2 does not support the requested traffic class, the request is downgraded to a "next best" traffic class supported by the N2. For example, if the user terminal UE1 requests streaming or conversational class and the N2 only supports the interactive class, the system S may be configured to provide the user terminal UE1 with the interactive class with a highest Traffic handling priority (i.e. THP = 1)

The signalling messages and steps shown in Figures 2 and 3 are simplified and aim only at describing the idea of the invention. Other signalling messages may be sent and/or other functions carried out between the messages and/or the steps. The signalling messages serve only as examples and they may contain only some of the information mentioned above. The messages may also include other information, and the titles of the messages may deviate from those given above.

In addition to prior art means, a system or system network nodes that implement the functionality of the invention comprise means for processing information relating to the QoS service profiles and/or traffic classes in a manner described above. Existing network nodes and user terminals comprise processors and memory that can be utilized in the operations of the invention. Any changes needed in implementing the invention may be carried out using supplements or updates of software routines and/or routines included in application specific integrated circuits (ASIC) and/or programmable circuits, such as EPLDs (Electrically Programmable Logic Device) or FPGAs (Field Programmable Gate Array).

It will be obvious to a person skilled in the art that, as the technology advances, the inventive concept can be implemented in various ways. The invention and its embodiments are not limited to the examples described above but may vary within the scope of the claims.

## Claims

1. A method for service profile modification in a wireless communication system (S) comprising
a first communication network (N1),
a second communication network (N2) comprising a serving network node (SGSN2), and
a user terminal (UE1), wherein the first communication network (N1) is a home network for the user terminal (UE1),
wherein the method comprises
receiving, in the second communication network (N2), a context activation request (2-1) from the user terminal (UE1), wherein the user terminal (UE1) is roaming in the second communication network (N2)
transmitting (2-2) a service profile request, from the serving network node (SGSN2) to the first communication network (N1), and
receiving (2-3), in the serving network node (SGSN2), information on the service profile of the user terminal (UE1) from the first communication network
(N1); the method being **characterized in that**,
if a service capability of the second communication network (N2) is higher than defined in the service profile of the user terminal (UE1), upgrading (2-4), the service- profile of the user terminal (UE1) according to the service capability of the second communication network (N2),
transmitting (2-8) a capability request from the second communication network (N2) to the user terminal (UE1), wherein the capability request includes information on the upgraded service profile of the user terminal (UE1);
receiving (3-9), from the user terminal (UE1), **capability** information on the service capability of the user terminal (UE1); and
if a service capability of the user terminal (UE1) is lower than defined in the upgraded service profile, downgrading 2-16 (12-12) the service profile of the user terminal (UE1) according to the service capability of the user terminal (UE1).

2. A method according to claim 1, **characterized by** transmitting (2-5, 2-13) information on the upgraded service profile to the first communication network (N1).

3. A method according to claim 1 or 2, **characterized by** transmitting (2-13) information on the downgraded service profile to the first communication network (N1).

4. A method According to claim 1, 2 or 3, **characterized by** downgrading (2-12) the service profile of the user terminal (UE1) according to a service subscription of the user terminal (UE1).

5. A method according to any of claims 1 to 4, **characterized by** performing a context activation for the user terminal (UE1) by using the upgraded service profile or the downgraded service profile.

6. A method according to any of claims 1. to 5, **characterized by** upgrading the maximum bit rate offered to user terminal in the second communication network (N2).

7. A method according to claim 6, **characterized by** upgrading the maximum bit rate to about 2 Mbps or higher.

8. A method according to any of claims 1 to 7, **characterized by** upgrading the traffic class of the user terminal (UE1) in the second communication network (N2).

9. A method according to claim 8, **characterized by** upgrad; ing the traffic class of the user terminal (UE1) from background traffic class to interactive traffic class.

10. A method according to claim 8, **characterized by** upgrading the traffic class of the user terminal (UE1) from interactive or background traffic class to streaming traffic class.

11. A method according to claim 8, **characterized by** upgrading the traffic class of the user terminal (UE1) from interactive, background or streaming traffic class to conversational traffic class.

12. A method according to any of claims 1 to 11, **characterized in that** the serving network node (SGSN2) is a Serving GPRS support node SGSN.

13. A method according to claim any of claims 1 to 12, **characterized by** providing a HSDPA service in a visited network (N2) to a HSDPA-capable user terminal (UE1) having a non-HSDPA capable home network (N1).

14. A method according to claim any of claims 1 to 13, **characterized by** providing an HSUPA service in a visited network (N2) to an HSUPA-capable user terminal (UE1) having a non-HSUPA capable home network (N1).

15. A method according to any of claims 1 to 14, **characterized in that** the upgrading is temporary.

16. A method according to any of claims 1 to 15, **characterized in that** the downgrading is temporary.

17. A wireless communication system (S) comprising
a first communication network (N1),
a second communication network (N2) comprising a serving network node (SGSN2), and
a user terminal (UE1) roaming in the second communication network (N2),
the first communication network (N1) being a home network for the user terminal (UE1),
wherein the communication system (S) is configured to
receive, in the second communication network (N2), a context activation request from the user terminal (UE1),
transmit a service profile requests from the serving network node (SGSN2) to the first communication network (N1), and
receive, in the serving network node (SGSN2), information on the service profile of the user terminal from the first communication network,
wherein the communication system (S) is **characterized in that** it is further configured to
- compare a service capability of the second communication network . (N2) with a service capability defined in the service profile of the user terminal (UE1);and if the service capability of the second communication network (N2) is higher than the one defined in the service profile of the user terminal (UE1),
- upgrade the service profile of the user terminal (UE1) according to the service capability of the second communication network (N2),
- transmit a capability request from the second communication network (N1 to the user terminal (UE1), wherein the capability request includes information on the upgraded service profile of the user terminal (UE1);
- receive, from the user terminal (UE1), capability information on a service capability of the user terminal (UE1); and if the service capability of the user terminal (UE1) is lower than defined in the upgraded service profile,
- downgrade the service profile of the user terminal (UE1) according to the service capability of the user terminal (UE1).

18. A communication system according to claim 17, **characterized in that** it is configured to transmit information on the upgraded service profile from the second communication network (N2) to the first communication network (N1).

19. A communication system according to claim 17 or 18, **characterized in that** it is configured to transmit information on the downgrades service profile from the second communication network (N2) to the first communication network (N1).

20. A communication system according to any of claims 17, 18 or **19, characterized in that** it is configured to downgrade the service profile of the user terminal (UE1) according to a service subscription of the user terminal (UE1).

21. A communication system according to any of claims 17 to 20, **characterized in that** it is configured to perform a context activation for the user terminal (UE1) by using the upgraded service profile or the downgraded service profile.

22. A communication system according to any of claims 17 to 21, **characterized in that** it is configured to upgrade the maximum bit rate offered to the user terminal (UE1) in the second communication network (N2).

23. A communication system according to any of claims 17 to 22, **characterized in that** it is configured to upgrade the traffic class of the user terminal (UE1) in the second communication network (N2).

24. A serving network node (SGSN2) in a communication system , (S), the system comprising
a first communication network (N1),
a second communication network (N2), and
a user terminal (UE1),
wherein the serving network node (SGSN2) is located in the second communication network (N2) and, as a response to receiving a context activation request from the user terminal (UE1) roaming in the second communication network (N2), configured to
transmit a service profile request to the first communication network (N1), and
receive information on the service profile of the user terminal (UE1) from the first communication network (N1),
wherein the serving network node (SGSN2) is **characterized in that** it is further configured to
- compare a service capability of the second communication network (N2) with a service capability defined in the service profile of the user terminal (UE1); and if the service capability of the second communication network (N2) is higher than the one defined in the service profile of the user terminal (UE1),
- upgrade the service profile of the user terminal (UE1) according to the service capability of the second communication network (N2),
- receive, from the user terminal (UE1), information on a service capability of the user terminal (UE1); and if the service capability of the user terfinal (UE1) is lower than defined in the upgraded service profile,
- downgraded the service profile of the user terminal (UE1) according to the service capability of the user terminal (UE1).

25. A serving network node according to claims 24, **characterized in that** it is configured to transmit information on the upgraded services profile to the first communication network (N1).

26. A serving network node according to claims 24 or 25, **characterized in that** it is configured to transmit information on the downgraded service profile to the first communication network (N1).

27. A serving network node according to any of claims 24, 25 or 26, **characterized in that** it is configured to downgrade the service profile of the user terminal (UE1) according to a service subscription of the user terminal (UE1).

28. A serving network node according to any of claims 24 to 27, **characterized in that** it is configured to upgrade the maximum bit rate offered to user terminal (UE1).

29. A serving network node according to any of claims 24 to 28, **characterized in that** it is configured to upgrade the traffic class of the user terminal (UE1).

## Patentansprüche

1. Verfahren zur Änderung eines Dienstprofils in einem drahtlosen Kommunikationssystem (S) mit:
einem ersten Kommunikationsnetzwerk (N1),
einem zweiten Kommunikationsnetzwerk (N2) mit einem versorgenden Netzknoten (SGSN2) und
einer Benutzerstation (UE1), wobei das erste Kommunikationsnetzwerk (N1) ein Heimnetz für die Benutzerstation (UE1) ist,
wobei das Verfahren aufweist:
Empfangen einer Kontextaktivierungsabfrage (2-1) von der Benutzerstation (UE1) im zweiten Kommunikationsnetzwerk (N2), wobei die Benutzerstation (UE1) im zweiten Kommunikationsnetzwerk (N2) roamt,
Übertragen (2-2) einer Dienstprofilabfrage vom versorgenden Netzknoten (SGSN2) zum ersten Kommunikationsnetzwerk (N1) und
Empfangen (2-3) von Informationen über das Dienstprofil der Benutzerstation (UE1) vom ersten Kommunikationsnetzwerk (N1) im versorgenden Netzknoten (SGSN2); wobei das Verfahren **dadurch gekennzeichnet ist, dass**,
falls eine Dienstfähigkeit des zweiten Kommunikationsnetzwerks (N2) höher als diejenige ist, die im Dienstprofil der Benutzerstation (UE1) definiert ist, das Dienstprofil der Benutzerstation (UE1) gemäß der Dienstfähigkeit des zweiten Kommunikationsnetzwerks (N2) upgegradet wird,
eine Fähigkeitsabfrage vom zweiten Kommunikationsnetzwerk (N2) zur Benutzerstation (UE1) übertragen wird (2-8), wobei die Fähigkeitsabfrage Informationen über das upgegradete Dienstprofil der Benutzerstation (UE1) enthält;
Fähigkeitsinformationen über die Dienstfähigkeit der Benutzerstation (UE1) von der Benutzerstation (UE1) empfangen werden (2-9); und
falls eine Dienstfähigkeit der Benutzerstation (UE1) niedriger als diejenige ist, die im upgegradeten Dienstprofil definiert ist, das Dienstprofil der Benutzerstation (UE1) gemäß der Dienstfähigkeit der Benutzerstation (UE1) downgegradet (2-10, 2-12) wird.

2. Verfahren nach Anspruch 1, **dadurch gekennzeichnet, dass** Informationen über das upgegradete Dienstprofil zum ersten Kommunikationsnetzwerk (N1) übertragen werden (2-5, 2-13).

3. Verfahren nach Anspruch 1 oder 2, **dadurch gekennzeichnet, dass** Informationen über das downgegradete Dienstprofil zum ersten Kommunikationsnetzwerk (N1) übertragen werden (2-13).

4. Verfahren nach Anspruch 1, 2 oder 3, **dadurch gekennzeichnet, dass** das Dienstprofil der Benutzerstation (UE1) gemäß eines Dienstabonnements der Benutzerstation (UE1) downgegradet wird (2-12).

5. Verfahren nach einem der Ansprüche 1 bis 4, **dadurch gekennzeichnet, dass** eine Kontextaktivierung für die Benutzerstation (UE1) unter Verwendung des upgegradeten Dienstprofils oder des downgegradeten Dienstprofils durchgeführt wird.

6. Verfahren nach einem der Ansprüche 1 bis 5, **dadurch gekennzeichnet, dass** die der Benutzerstation angebotene maximale Bitrate im zweiten Kommunikationsnetzwerk (N2) upgegradet wird.

7. Verfahren nach Anspruch 6, **dadurch gekennzeichnet, dass** die maximale Bitrate auf ungefähr 2 Mbps oder höher upgegradet wird.

8. Verfahren nach einem der Ansprüche 1 bis 7, **dadurch gekennzeichnet, dass** die Verkehrsklasse der Benutzerstation (UE1) im zweiten Kommunikationsnetzwerk (N2) upgegradet wird.

9. Verfahren nach Anspruch 8, **dadurch gekennzeichnet, dass** die Verkehrsklasse der Benutzerstation (UE1) von der Hintergrundverkehrsklasse auf die interaktive Verkehrsklasse upgegradet wird.

10. Verfahren nach Anspruch 8, **dadurch gekennzeichnet, dass** die Verkehrsklasse der Benutzerstation (UE1) von der interaktiven oder Hintergrundverkehrsklasse auf die Streaming-Verkehrsklasse upgegradet wird.

11. Verfahren nach Anspruch 8, **dadurch gekennzeichnet, dass** die Verkehrsklasse der Benutzerstation (UE1) von der interaktiven, Hintergrund- oder Streaming-Verkehrsklasse auf die dialogfähige Verkehrsklasse upgegradet wird.

12. Verfahren nach einem der Ansprüche 1 bis 11, **dadurch gekennzeichnet, dass** der versorgende Netzknoten (SGSN2) ein Serving GPRS Support Node SGSN ist.

13. Verfahren nach einem der Ansprüche 1 bis 12, **dadurch gekennzeichnet, dass** eine HSDPA-fähige Benutzerstation (UE1) mit einem nicht HSDPA-fähigen Heimnetz (N1) in einem besuchten Netzwerk (N2) mit einem HSDPA-Dienst versehen wird.

14. Verfahren nach einem der Ansprüche 1 bis 13, **dadurch gekennzeichnet, dass** eine HSUPA-fähige Benutzerstation (UE1) mit einem nicht HSUPA-fähigen Heimnetz (N1) in einem besuchten Netzwerk (N2) mit einem HSUPA-Dienst versehen wird.

15. Verfahren nach einem der Ansprüche 1 bis 14, **dadurch gekennzeichnet, dass** das Upgrade vorläufig ist.

16. Verfahren nach einem der Ansprüche 1 bis 15, **dadurch gekennzeichnet, dass** das Downgrade vorläufig ist.

17. Drahtloses Kommunikationssystem (S) mit:
einem ersten Kommunikationsnetzwerk (N1),
einem zweiten Kommunikationsnetzwerk (N2) mit einem versorgenden Netzknoten (SGSN2) und
einer Benutzerstation (UE1), die im zweiten Kommunikationsnetzwerk (N2) roamt,
welches erste Kommunikationsnetzwerk (N1) ein Heimnetz für die Benutzerstation (UE1) ist,
wobei das Kommunikationssystem (S) konfiguriert ist,
eine Kontextaktivierungsabfrage von der Benutzerstation (UE1) im zweiten Kommunikationsnetzwerk (N2) zu empfangen,
eine Dienstprofilabfrage vom versorgenden Netzknoten (SGSN2) zum ersten Kommunikationsnetzwerk (N1) zu übertragen und
Informationen über das Dienstprofil der Benutzerstation vom ersten Kommunikationsnetzwerk im versorgenden Netzknoten (SGSN2) zu empfangen,
wobei das Kommunikationssystem (S) **dadurch gekennzeichnet ist, dass** es ferner konfiguriert ist,
- eine Dienstfähigkeit des zweiten Kommunikationsnetzwerkes (N2) mit einer im Dienstprofil der Benutzerstation (UE1) definierten Dienstfähigkeit zu vergleichen; und falls die Dienstfähigkeit des zweiten Kommunikationsnetzwerks (N2) höher als diejenige ist, die im Dienstprofil der Benutzerstation (UE1) definiert ist,
- das Dienstprofil der Benutzerstation (UE1) gemäß der Dienstfähigkeit des zweiten Kommunikationsnetzwerks (N2) upzugraden,
- eine Fähigkeitsabfrage vom zweiten Kommunikationsnetzwerk (N1) zur Benutzerstation (UE1) zu übertragen, wobei die Fähigkeitsabfrage Informationen über das upgegradete Dienstprofil der Benutzerstation (UE1) enthält;
- Fähigkeitsinformationen über eine Dienstfähigkeit der Benutzerstation (UE1) von der Benutzerstation (UE1) zu empfangen; und falls die Dienstfähigkeit der Benutzerstation (UE1) niedriger als diejenige ist, die im upgegradeten Dienstprofil definiert ist,
- das Dienstprofil der Benutzerstation (UE1) gemäß der Dienstfähigkeit der Benutzerstation (UE1) downzugraden.

18. Kommunikationssystem nach Anspruch 17, **dadurch gekennzeichnet, dass** es konfiguriert ist, Informationen über das upgegradete Dienstprofil vom zweiten Kommunikationsnetzwerk (N2) zum ersten Kommunikationsnetzwerk (N1) zu übertragen.

19. Kommunikationssystem nach Anspruch 17 oder 18, **dadurch gekennzeichnet, dass** es konfiguriert ist, Informationen über das downgegradete Dienstprofil vom zweiten Kommunikationsnetzwerk (N2) zum ersten Kommunikationsnetzwerk (N1) zu übertragen.

20. Kommunikationssystem nach einem der Ansprüche 17, 18 oder 19, **dadurch gekennzeichnet, dass** es konfiguriert ist, das Dienstprofil der Benutzerstation (UE1) gemäß eines Dienstabonnements der Benutzerstation (UE1) downzugraden.

21. Kommunikationssystem nach einem der Ansprüche 17 bis 20, **dadurch gekennzeichnet, dass** es konfiguriert ist, eine Kontextaktivierung für die Benutzerstation (UE1) unter Verwendung des upgegradeten Dienstprofils oder des downgegradeten Dienstprofils durchzuführen.

22. Kommunikationssystem nach einem der Ansprüche 17 bis 21, **dadurch gekennzeichnet, dass** es konfiguriert ist, die der Benutzerstation (UE2) angebotene maximale Bitrate im zweiten Kommunikationsnetzwerk (N2) upzugraden.

23. Kommunikationssystem nach einem der Ansprüche 17 bis 22, **dadurch gekennzeichnet, dass** es konfiguriert ist, die Verkehrsklasse der Benutzerstation (UE1) im zweiten Kommunikationsnetzwerk (N2) upzugraden.

24. Versorgender Netzknoten (SGSN2) in einem Kommunikationssystem (S) mit:
einem ersten Kommunikationsnetzwerk (N1),
einem zweiten Kommunikationsnetzwerk (N2) und
einer Benutzerstation (UE1),
wobei sich der versorgende Netzknoten (SGSN2) im zweiten Kommunikationsnetzwerk (N2) befindet und, als Antwort auf Empfangen einer Kontextaktivierungsabfrage von der im zweiten Kommunikationsnetzwerk (N2) roamenden Benutzerstation (UE1), konfiguriert ist,
eine Dienstprofilabfrage zum ersten Kommunikationsnetzwerk (N1) zu übertragen und
Informationen über das Dienstprofil der Benutzerstation (UE1) vom ersten Kommunikationsnetzwerk (N1) zu empfangen,
wobei der versorgende Netzknoten (SGSN2) **dadurch gekennzeichnet ist, dass** er ferner konfiguriert ist,
- eine Dienstfähigkeit des zweiten Kommunikationsnetzwerkes (N2) mit einer im Dienstprofil der Benutzerstation (UE1) definierten Dienstfähigkeit zu vergleichen; und falls die Dienstfähigkeit des zweiten Kommunikationsnetzwerks (N2) höher als diejenige ist, die im Dienstprofil der Benutzerstation (UE1) definiert ist,
- das Dienstprofil der Benutzerstation (UE1) gemäß der Dienstfähigkeit des zweiten Kommunikationsnetzwerks (N2) upzugraden,
- Informationen über eine Dienstfähigkeit der Benutzerstation (UE1) von der Benutzerstation (UE1) zu empfangen; und falls die Dienstfähigkeit der Benutzerstation (UE1) niedriger als diejenige ist, die im upgegradeten Dienstprofil definiert ist,
- das Dienstprofil der Benutzerstation (UE1) gemäß der Dienstfähigkeit der Benutzerstation (UE1) downzugraden.

25. Versorgender Netzknoten nach Anspruch 24, **dadurch gekennzeichnet, dass** er konfiguriert ist, Informationen über das upgegradete Dienstprofil zum ersten Kommunikationsnetzwerk (N1) zu übertragen.

26. Versorgender Netzknoten nach Anspruch 24 oder 25, **dadurch gekennzeichnet, dass** er konfiguriert ist, Informationen über das downgegradete Dienstprofil zum ersten Kommunikationsnetzwerk (N1) zu übertragen.

27. Versorgender Netzknoten nach einem der Ansprüche 24, 25 oder 26, **dadurch gekennzeichnet, dass** er konfiguriert ist, das Dienstprofil der Benutzerstation (UE1) gemäß eines Dienstabonnements der Benutzerstation (UE1) downzugraden.

28. Versorgender Netzknoten nach einem der Ansprüche 24 bis 27, **dadurch gekennzeichnet, dass** es konfiguriert ist, die der Benutzerstation (UE1) angebotene maximale Bitrate upzugraden.

29. Versorgender Netzknoten nach einem der Ansprüche 24 bis 28, **dadurch gekennzeichnet, dass** er konfiguriert ist, die Verkehrsklasse der Benutzerstation (UE1) upzugraden.

## Revendications

1. Procédé de modification de profil de service dans un système de communication sans fil (S) comprenant :
un premier réseau de communication (N1) ;
un second réseau de communication (N2) qui comprend un noeud de réseau de service (SGSN2) ; et
un terminal utilisateur (UE1), dans lequel le premier réseau de communication (N1) est un réseau domestique pour le terminal utilisateur (UE1) ;
dans lequel le procédé comprend les étapes consistant à :
recevoir, dans le second réseau de communication (N2), une demande d'activation de contexte (2 - 1) en provenance du terminal utilisateur (UE1), dans lequel le terminal utilisateur (UE1) se déplace dans le second réseau de communication (N2) ;
émettre (2 - 2) une demande de profil de service, à partir du noeud de réseau de service (SGSN2) vers le premier réseau de communication (N1) ; et
recevoir (2 - 3) dans le noeud de réseau de service (SGSN2), des informations qui concernent le profil de service du terminal utilisateur (UE1) en provenance du premier réseau de communication (N1) , le procédé étant **caractérisé en ce que** :
si une capacité de service du second réseau de communication (N2) est supérieure à celle qui est définie dans le profil de service du terminal utilisateur (UE1), améliorer (2 - 4) le profil de service du terminal utilisateur (capacité du second réseau de communication (N2) ;
émettre (2 - 8) une demande de capacité à partir du second réseau de communication (N2) vers le terminal utilisateur (UE1), dans lequel la demande de capacité comprend des informations qui concernent le profil de service amélioré du terminal utilisateur (UE1) ;
recevoir (2 - 9), en provenance du terminal utilisateur (UE1), des informations de capacité qui concernent la capacité de service du terminal utilisateur (UE1) ; et
si une capacité de service du terminal utilisateur (UE1) est inférieure à celle définie dans le profil de service amélioré, dégrader (2 - 10, 2 - 12) le profil de service du terminal utilisateur (UE1) selon la capacité de service du terminal utilisateur (UE1).

2. Procédé selon la revendication 1, **caractérisé par** l'étape consistant à émettre (2 - 5, 2 - 13) des informations qui concernent le profil de service amélioré vers le premier réseau de communication (N1).

3. Procédé selon la revendication 1 ou la revendication 2, **caractérisé par** l'étape consistant à émettre (2 - 13) des informations qui concernent le profil de service dégradé vers le premier réseau de communication (N1).

4. Procédé selon l'une quelconque des revendications 1, 2 ou 3, **caractérisé par** l'étape consistant à dégrader (2 - 12) le profil de service du terminal utilisateur (UE1) selon un abonnement de service du terminal utilisateur (UE1).

5. Procédé selon l'une quelconque des revendications 1 à 4, **caractérisé par** l'étape consistant à exécuter une activation de contexte du terminal utilisateur (UE1) en utilisant le profil de service amélioré ou le profil de service dégradé.

6. Procédé selon l'une quelconque des revendications 1 à 5, **caractérisé par** l'étape consistant à améliorer le débit binaire maximum offert au terminal utilisateur dans le second réseau de communication (N2).

7. Procédé selon la revendication 6, **caractérisé par** l'étape consistant à améliorer le débit binaire maximum jusqu'à 2 Mbps environ, voire plus.

8. Procédé selon l'une quelconque des revendications 1 à 7, **caractérisé par** l'étape consistant à améliorer la classe de trafic du terminal utilisateur (UE1) dans le second réseau de communication (N2).

9. Procédé selon la revendication 8, **caractérisé par** l'étape consistant à améliorer la classe de trafic du terminal utilisateur (UE1) à partir d'une classe de trafic non prioritaire vers une classe de trafic interactif.

10. Procédé selon la revendication 8, **caractérisé par** l'étape consistant à améliorer la classe de trafic du terminal utilisateur (UE1) à partir d'une classe de trafic interactif ou non prioritaire vers une classe de trafic en continu.

11. Procédé selon la revendication 8, **caractérisé par** l'étape consistant à améliorer la classe de trafic du terminal utilisateur (UE1) à partir d'une classe de trafic interactif ou non prioritaire ou en continu vers une classe de trafic conversationnel.

12. Procédé selon l'une quelconque des revendications 1 à 11, **caractérisé en ce que** le noeud de réseau de service (SGSN2) est un noeud de support de service GPRS, SGSN.

13. Procédé selon l'une quelconque des revendications 1 à 12, **caractérisé par** l'étape consistant à fournir un service HSDPA dans un réseau visité (N2) à un terminal utilisateur compatible HSDPA (UE1) qui présente un réseau domestique non compatible HSDPA (N1).

14. Procédé selon l'une quelconque des revendications 1 à 13, **caractérisé par** l'étape consistant à fournir un service HSUPA dans un réseau visité (N2) à un terminal utilisateur compatible HSUPA (UE1) qui présente un réseau domestique non compatible HSUPA (N1).

15. Procédé selon l'une quelconque des revendications 1 à 14, **caractérisé en ce que** l'amélioration est provisoire.

16. Procédé selon l'une quelconque des revendications 1 à 15, **caractérisé en ce que** la dégradation est provisoire.

17. Système de communication sans fil (S) comprenant :
un premier réseau de communication (N1) ;
un second réseau de communication (N2) qui comprend un noeud de réseau de desserte (SGSN2) ; et
un terminal utilisateur (UE1) qui se déplace dans le second réseau de communication (N2) ;
le premier réseau de communication (N1) étant un réseau domestique du terminal utilisateur (UE1) ;
dans lequel le système de communication (S) est configuré de manière à :
recevoir, dans le second réseau de communication (N2), une demande d'activation de contexte en provenance du terminal utilisateur (UE1) ;
émettre une demande de profil de service, à partir du noeud de réseau de desserte (SGSN2) vers le premier réseau de communication (N1) ; et
recevoir, dans le noeud de réseau de services (SGSN2), des informations qui concernent le profil de service du terminal utilisateur en provenance du premier réseau de communication ;
dans lequel le système de communication (S) est **caractérisée en ce qu'**il est configuré en outre de manière à :
- comparer une capacité de service du second réseau de communication (N2) avec une capacité de service définie dans le profil de service du terminal utilisateur (UE1) ; et si la capacité de service du second réseau de communication (N2) est supérieure à celle qui est définie dans le profil de service du terminal utilisateur (UE1) :
- améliorer le profil de service du terminal utilisateur (UE1) selon la capacité de service du second réseau de communication (N2) ;
- émettre une demande de capacité à partir du second réseau de communication (N1) vers le terminal utilisateur (UE 1), dans lequel la demande de capacité comprend des informations qui concernent le profil de service amélioré du terminal utilisateur (UE1) ;
- recevoir, en provenance du terminal utilisateur (UE1), des informations de capacité qui concernent une capacité de service du terminal utilisateur (UE1) ; et si la capacité de service du terminal utilisateur (UE1) est inférieure à celle qui est définie dans le profil de service amélioré :
- dégrader le profil de service du terminal utilisateur (UE1) selon la capacité de service du terminal utilisateur (UE1),

18. Système de communication selon la revendication 17, **caractérisé en ce qu'**il est configuré de manière à émettre des informations qui concernent le profil de service amélioré en provenance du second réseau de communication (N2) vers le premier réseau de communication (N1).

19. Système de communication selon la revendication 17 ou la revendication 18, **caractérisé en ce qu'**il est configuré de manière à émettre des informations qui concernent le profil de service dégradé en provenance du second réseau de communication (N2) vers le premier réseau de communication (N1).

20. Système de communication selon l'une quelconque des revendications 17, 18 ou 19, **caractérisé en ce qu'**il est configuré de manière à dégrader le profil de service du terminal utilisateur (UE1) selon un abonnement de service du terminal utilisateur (UE1).

21. Système de communication selon l'une quelconque des revendications 17 à 20, **caractérisé en ce qu'**il est configuré de manière à exécuter une activation de contexte du terminal utilisateur (UE1) en utilisant le profil de service amélioré ou le profil de service dégradé.

22. Système de communication selon l'une quelconque des revendications 17 à 21, **caractérisé en ce qu'**il est configuré de manière à améliorer le débit binaire maximum offert au terminal utilisateur (UE1) dans le second réseau de communication (N2).

23. Système de communication l'une quelconque des revendications 17 à 22, **caractérisé en ce qu'**il est configuré de manière à améliorer la classe de trafic du terminal utilisateur dans le second réseau de communication (N2).

24. Noeud de réseau de service (SGSN2) dans un système de communication (S), le système comprenant :
un premier réseau de communication (N1);
un second réseau de communication (N2);
un terminal utilisateur (UE1) ;
dans lequel le noeud de réseau de service (SGSN2) se situe dans le second réseau de communication (N2) et, en réponse à la réception d'une demande d'activation de contexte en provenance du terminal utilisateur (UE1) qui se déplace dans le second réseau de communication (N2), est configuré de manière à :
émettre une demande de profil de service vers le premier réseau de communication (N1) ; et
recevoir des informations qui concernent le profil de service du terminal utilisateur (UE 1) en provenance du premier réseau de communication (N1) ;
dans lequel le noeud de réseau de service (SGSN2) est **caractérisée en ce qu'**il est configuré de manière à :
- comparer une capacité de service du second réseau de communication (N2) avec une capacité de service définie dans le profil de service du terminal utilisateur (UE1) ; et si la capacité de service du second réseau de communication (N2) est supérieure à celle qui est définie dans le profil de service du terminal utilisateur (UE1) :
- améliorer le profil de service du terminal utilisateur (UE1) selon la capacité de service du second réseau de communication (N2) ;
- recevoir, en provenance du terminal utilisateur (UE1), des informations qui concernent une capacité de service du terminal utilisateur (UE1) ; et si la capacité de service du terminal utilisateur (UE1) est inférieure à celle qui est définie dans le profil de service amélioré :
- dégrader le profil de service du terminal utilisateur (UE1) selon la capacité de service du terminal utilisateur (UE1).

25. Noeud de réseau de service selon la revendication 24, **caractérisé en ce qu'**il est configuré de manière à émettre des informations qui concernent le profil de service amélioré vers le premier réseau de communication (N1).

26. Noeud de réseau de service selon l'une quelconque des revendications 24 ou 25, **caractérisé en ce qu'**il est configuré de manière à émettre des informations qui concernent le profil de service dégradé vers le premier réseau de communication (N1).

27. Noeud de réseau de service selon l'une quelconque des revendications 24, 25 ou 26, **caractérisé en ce qu'**il est configuré de manière à dégrader le profil de service du terminal utilisateur (UE1) selon un abonnement de service du terminal utilisateur (UE1).

28. Noeud de réseau de service selon l'une quelconque des revendications 24 à 27, **caractérisé en ce qu'**il est configuré de manière à améliorer le débit binaire maximum offert au terminal utilisateur (UE1).

29. Noeud de réseau de service selon l'une quelconque des revendications 24 à 28, **caractérisé en ce qu'**il est configuré de manière à améliorer la classe de trafic du terminal utilisateur (UE1).
